# EUROPEAN PATENT APPLICATION

(11) **EP 3 061 951 A1**
(43) Date of publication of application: **31.08.2016**
(21) Application number: 15156585.0
(22) Date of filing: 25.02.2015
(51) Int. Cl.: F02D 19/06, F02M 43/04, F02M 67/02, F02D 19/10, F02D 21/10, F02M 23/00

(54) **Fuel injection unit**

(71) Applicant: AVL MTC Motortestcenter AB, 15148 Södertälje (SE)
(72) Inventor: SELVARAJ, Alfred Herman, 12050 ARSTA (SE); LUNDSTEDT, Mats, 15135 SÖDERTÄLJE (SE)
(74) Representative: Babeluk, Michael

(57) **Abstract**

The invention relates to a fuel injection unit (1) for assembly to a cylinder head and for injecting fuel into a combustion chamber (17) of a dual-fuel engine, the fuel injection unit (1) comprising at least one first nozzle (16) with at least one first aperture (9) for injecting a liquid pilot fuel (F) into the combustion chamber (17), wherein the first nozzle (16) comprises at least one second aperture (10) for injecting a gaseous medium (A) into the combustion chamber (17) and each second aperture (10) is assigned to at least one first aperture (9).

## Description

The present invention relates to a fuel injection unit for assembly to a cylinder head and for injecting pilot fuel into a combustion chamber of a dual-fuel engine, the fuel injection unit comprising at least one first nozzle with at least one first aperture for injecting a liquid pilot fuel into the combustion chamber. The invention furthermore relates to a method for operating such a fuel injection unit.

Increasingly, internal combustion engines are operated with combinations of liquid and gaseous fuels to take advantage of the better emission properties of gaseous fuels, thereby satisfying increasingly strict emissions regulations and for better reliability in terms of fuel-flexibility, operational flexibility. So called dual-fuel (DF) engines may use natural gas as gaseous fuel and light or heavy fuel oil in liquid form. Such engine concepts are often implemented in large engines, e.g., with more than 100 kW power per cylinder, which may be used as main propulsion engines or auxiliary engines in marine vessels or power plants.

In such applications natural gas is mixed with the intake air and then introduced into the engine cylinder(s). Near the end of a compression stroke (TDC, top dead centre) a small quantity of pilot liquid fuel, e.g., diesel, is employed to ignite the air/natural gas mixture. By igniting particularly the pilot fuel at least one ignition flame jet for igniting the air fuel mixture in the main chamber is induced.

In case of very small quantities of pilot fuel, e.g., 1 to 2% in relation to the total fuel used in the combustion cycles, the term micro-pilot is commonly used. The advantage of employing such a homogeneous mixture of air and gas is that the combustion fuel to air ratio (F/A ratio) can be controlled so as to burn in a lean homogeneous manner and achieve lower NOx-emissions and lower particulate matter, compared to equivalent diesel-fuelled engines. One example of such a solution with related control strategies is disclosed in US 6,675,748 B2. US 6,439,192 B1 describes an injection valve with two separate concentric fuel injection valve assemblies for such an application, one valve assembly being used for pilot fuel, the second one for gaseous fuel.

A common large DF natural gas engine, provided with a micro-pilot injection system and low pressure main gas fuel-feed systems, may also feature twin nozzle-tip injectors. A nozzle tip with smaller sized nozzle-holes is for diesel micro-pilot injection in gas running-mode; a nozzle tip with larger-sized nozzle-holes is for diesel main injection in diesel running-mode; both nozzles are located in the same injector body. Combustion of a lean air-fuel mixture is initiated by injecting a small amount of pilot fuel into a cylinder. The pilot fuel is ignited in a conventional diesel process, providing a high-energy ignition source for the main charge. The use of two injection valves, one smaller and another larger injection valve, per cylinder is already known in the field of DF engines. One such solution is disclosed in WO 2012/072881.

The smaller-sized nozzle of the twin nozzle injector in the gas running-mode (micro-pilot-injected diesel igniting the inducted main fuel, natural gas) is capable of injecting at least 1 to 2% of total fuel energy proportion. This means that around 2% of the total energy generated in the engine cylinder(s) is caused by the pilot fuel. An example of such an approach is described in EP 0 964 139 B1. However, such a design is incapable of reliably igniting amounts of less than 2% pilot fuel leading to low ignition stability. A pilot proportion of more than 2%, on the other hand, reduces the engine performance (due to larger quantity of diesel operating in low compression-ratios typical of gas-mode-optimised dual fuel gas engines) and worsens NOx- and HC-emissions (due to more diesel mixing-controlled combustion and diesel combusting in low compression-ratios typical of DF natural gas engines).

Further, high pressure direct injection (HPDI) systems for heavy duty DF engines are known, wherein the nozzle tip comprises diesel-nozzle holes and main gas-injection nozzles-holes in staggered arrangement on the same nozzle-tip. A HPDI system can inject diesel and natural gas in the ratio of 98 up to 99% fuel energy input from natural gas. Such HPDI systems are disclosed, for instance, in WO 2014/186891 A1.

However, at idling- and part loads such systems are at a disadvantage because the engine has to switch over to high diesel-proportion running mode, consequently increasing NOx- and HC-emissions.

It is therefore the object of the invention to solve those drawbacks of prior art to improve engine performance of DF engines and, simultaneously, reduce their NOx- and HC-emissions.

In accordance with the invention this goal is achieved with abovementioned fuel injection unit where the first nozzle comprises at least one second aperture for injecting a gaseous medium into the combustion chamber and each second aperture is assigned to at least one first aperture. Preferably, the second aperture injects an oxidising medium into the combustion chamber.

The invention creates an envelope of gaseous and, preferably, oxidising medium for the pilot fuel, thereby increasing ignition stability for pilot fuel injection of less than 1% of total fuel input energy. The gaseous medium performs as temporary shield around the pilot fuel and in the case of an oxidising medium oxidises it. Also, the fuel ratio in the ignition mixture is improved because of the envelope of gaseous oxidising medium that prevents mixing of the pilot fuel with the surrounding mixture of gaseous fuel and intake air before the pilot fuel ignition. Consequently, shorter ignition delay of the pilot injection and better heat release intensity are achieved. In addition to improved engine performance all this also allows for smaller quantities of pilot fuel, hence additionally reducing emissions. Preferably, the gaseous medium injected through the second apertures is air which may be pressurized.

In a variant of the invention each first aperture is provided with multiple second apertures which surround their assigned first aperture. The second apertures may be arranged uniformly around the first apertures. This allows for a more homogeneous distribution of gaseous medium in the injection area of the pilot fuel. In the present disclosure "uniformly" means that the probability of finding the same number of second apertures in a region within the space bounded by the outer diameter of a first aperture and the pitch circle diameter of the most distant second aperture is constant.

In another variant of the invention the second apertures are arranged in a distance to their assigned first aperture from where a gaseous medium is injectable to an area of the combustion chamber into which liquid pilot fuel is injected by the first aperture assigned to said second apertures. This allows for a cloud or an envelope of gaseous, preferably oxidising medium to prevail in the area where the pilot fuel is injected to. Consequently, dilution of the pilot fuel with the surrounding mixture of main fuel - in most cases natural gas - and air is reduced and ignition of the pilot fuel is promoted.

In yet another variant of the invention all second apertures are arranged equidistant to their assigned first aperture. "Equidistant" here means that the second apertures at equal distance to their assigned first aperture. Distribution of gaseous oxidising medium and ignition quality of pilot fuel is increased when multiple second apertures are located on a pitch circle around their assigned first aperture, preferably pairwise opposite of each other. Opposite here means that the second apertures surround their respective first aperture and between each pair of second apertures is the first aperture.

In yet another embodiment of the invention the fuel injection unit comprises at least one second nozzle for injecting a main fuel into the combustion chamber. Hence, a twin nozzle unit is provided which combines injection of a main fuel - e.g., natural gas or diesel, depending on the chosen operating mode - with injection of a pilot fuel into one enclosure. This allows for compact and cost efficient implementation.

As explained in the beginning the goal of the invention is also achieved with a method for operating abovementioned fuel injection unit comprising the following steps:
a) injecting gaseous medium through at least one second aperture and
b) injecting liquid pilot fuel through at least one first aperture which is assigned to the at least one second aperture of step a).

Abovementioned steps are repeated at least once for each combustion cycle. The gaseous medium may be air or some other gas wherein the liquid pilot fuel may be diesel. In a variant of the invention in step a) an oxidising medium is injected via the at least one second aperture. Different such media are possible, e.g., air or recirculated exhaust gas. The method according to the invention provides a better combustion environment for the pilot fuel. The region of ignition mixture (gaseous medium and liquid pilot fuel) comprises a relatively high portion of liquid pilot fuel, hence the ignition delay decreases. Further there is a better heat release intensity. A further advantage is that a potentially smaller pilot fuel injection quantity is necessary, which results in low THC- (Total Hydro Carbon) and NOx-emissions. Further a cooler combustion environment may be established due to lower temperature of injected gaseous medium in step a) which is less conducive to NO-emissions. Consequently, the engine's performance is increased and emissions are reduced.

It is advantageous if the gaseous medium of step a) is pressurized, preferably to a pressure of at least the pressure in the combustion chamber at the start time of step a). The pressure of the gaseous medium is at least the same or higher than the pressure in the combustion chamber before TDC (top dead centre). Preferably, the pressure ranges within 200 bar of the pressure in the combustion chamber.

In a variant of the invention the start time of step a) is scheduled before or simultaneously with the start time of step b). In another variant, the end time of step a) is scheduled before or simultaneously with or after the start time of step b). This allows for the development of an envelope of gaseous oxidising medium, preferably air, around the subsequent spray of pilot fuel.

Good results are achieved when the gaseous oxidising medium of a second aperture in step a) is injected to an area of the combustion chamber into which liquid pilot fuel of its assigned first aperture is injected in step b). This increases the furnishing of an envelope of gaseous oxidising medium around the spray of pilot fuel, protecting it from the surrounding less self-ignitable gas/air mixture. The gaseous, preferably oxidising medium injected in step a) envelopes the spray of liquid fuel exiting the first aperture.

Preferably, the start time and/or the duration of injection of gaseous oxidising medium may be tuned with reference to the liquid fuel injection. This means that at least one of the following instants or durations of time is chosen depending on the amount of liquid pilot fuel in step b): start time of step a), end time of step a), duration of step a), start time of step b), end time of step b), duration of step b).

During a pilot fuel injection phase in step b) the pressurized gaseous oxidising medium is injected first in order to furnish, as much as possible, a pure oxidiser envelope around the subsequently injected pilot fuel spray. In this way a combustion environment is facilitated for pilot fuel.

The invention will be explained below in more detail by reference to the schematic drawings which are illustrative in nature and should not be considered as restricting the spirit or scope of the invention in any way:
- Fig. 1: shows a first variant of a fuel injection unit according to the present invention;
- Fig. 2: shows a nozzle tip of such a fuel injection unit;
- Fig. 3a: to Fig. 3c show different arrangements of first and second apertures;
- Fig. 4: shows a detail and operating principle of a nozzle tip of the fuel injection unit in operation;
- Fig. 5: shows exemplary control signals for injection of pilot fuel and a gaseous oxidising medium during a pilot fuel injection phase; and
- Fig. 6: shows a second variant of a fuel injection unit according to the present invention.

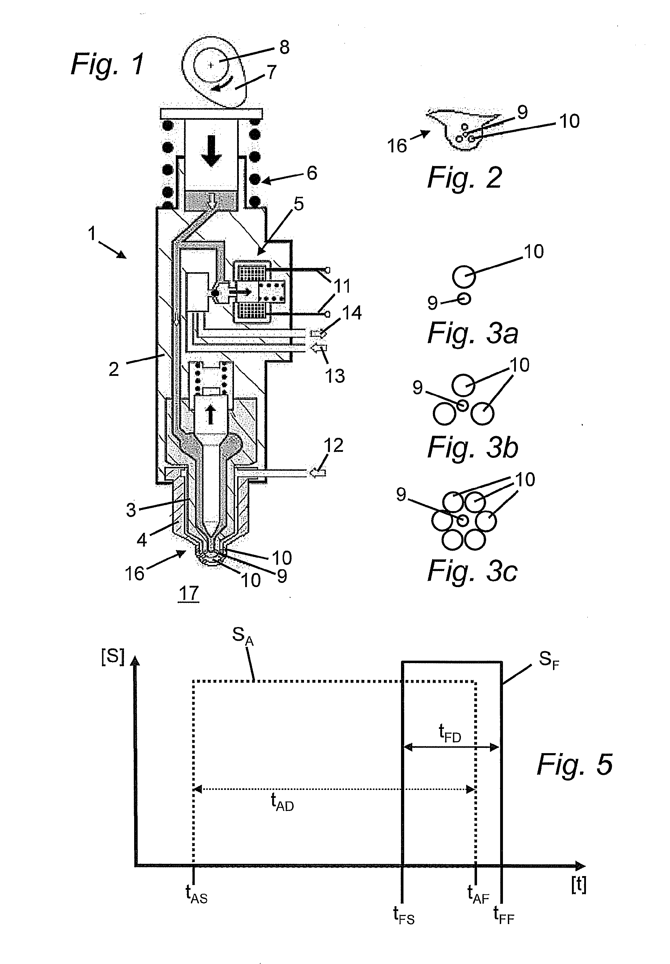

In the following, like reference numerals represent like parts throughout the figures. Fig. 1 shows a fuel injection unit 1 comprising a pilot-fuel injecting first nozzle 16 for a dual-fuel (DF) engine. The first nozzle 16 of the fuel injection unit 1 comprises an injector body 2, a nozzle body 3, a nozzle tip 4, a solenoid type injection valve 5 and a fuel pump unit 6 which can be actuated by a cam 7 of a camshaft 8 of the engine. The injector body 2 houses a solenoid actuating unit for the solenoid type injection valve 5 apart from the nozzle body 3. The injection valve 5 is energized by electrical connections 11.

The fuel injection unit 1 is comparable to a common diesel unit injector with a modified first nozzle 16. The first nozzle 16 and its injector body 2 can be resized to accommodate the channels and apertures for pilot fuel and a gaseous medium according to the invention.

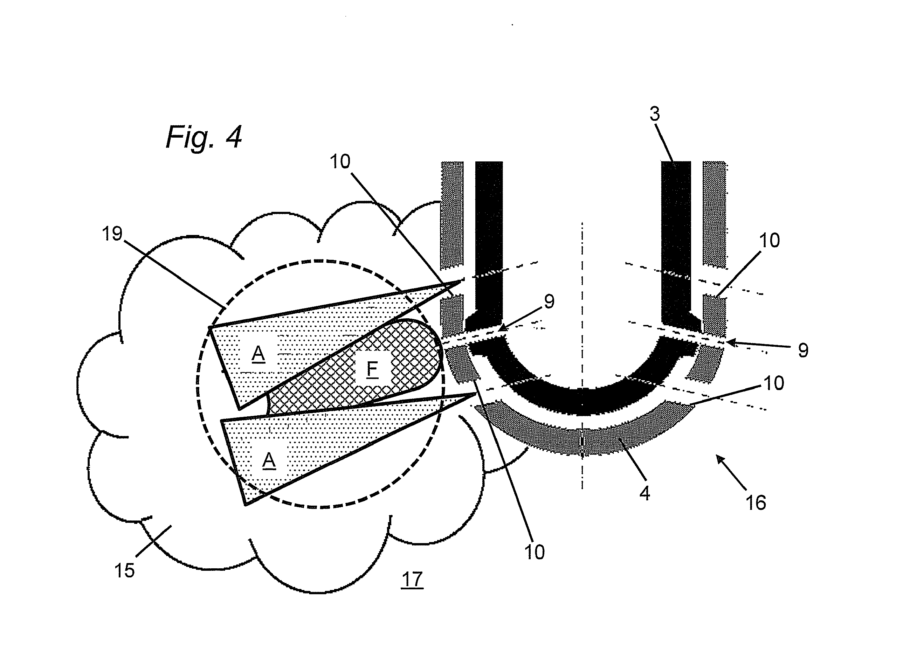

The nozzle body 3 which is shown in part or in its entirety in Figs. 1 to 4 comprises a plurality of first 9 and second apertures 10 which are arranged on the tip of the first nozzle 16. By means of the first apertures 9 liquid pilot fuel F - here, diesel - is injected into a combustion chamber 17 (Figs. 1 and 4). At least one second aperture 10 is assigned to each first aperture 9 and arranged in its vicinity. The second aperture 10 is adapted to inject a gaseous medium - preferably pressurized, preferably oxidising like air - into the combustion chamber 17. Good results are obtained when the gaseous oxidising medium is pressurized at least to the pressure in the combustion chamber 17 at the beginning of the injection of the gaseous oxidising medium. Also, the pressure may be the same or higher than the pressure in the combustion chamber 17 before TDC (top dead centre).

While it is possible to use different kinds of media for injection by the second apertures 10 it is preferable to use an oxidising medium. In addition to temporary shielding the pilot fuel from a surrounding gas mixture, thereby preventing immediate dilution of the pilot fuel, the injection of an oxidising medium allows oxidisation of the pilot fuel before dilution, resulting in better ignition quality.

A first such arrangement with three second apertures 10 formed by holes arranged triangularly in the nozzle tip 4 of the first nozzle 16 surrounding one corresponding first aperture 9 can be seen in Figs. 2 and 3b. Fig. 3a shows a more basic arrangement with only one second aperture 10 being arranged next to its assigned first aperture 9. Fig. 3c shows an arrangement where multiple second apertures 10 are located on a pitch circle around their assigned first aperture 9, preferably pairwise opposite of each other. The pitch circle is not depicted in Fig. 3c but it can clearly be seen that the centres of the second apertures 10 are all arranged on a circle around the assigned first aperture 9. In a variant not shown in the Figures a multi-sectored single annular second aperture may be arranged coaxially to a first aperture 9. In the embodiments of Figs. 3b and 3c all second apertures 10 are arranged uniformly and at equal distance to their assigned first aperture 9 which means that the centres of the second apertures 10 are equidistant to the centre of their corresponding first aperture 9.

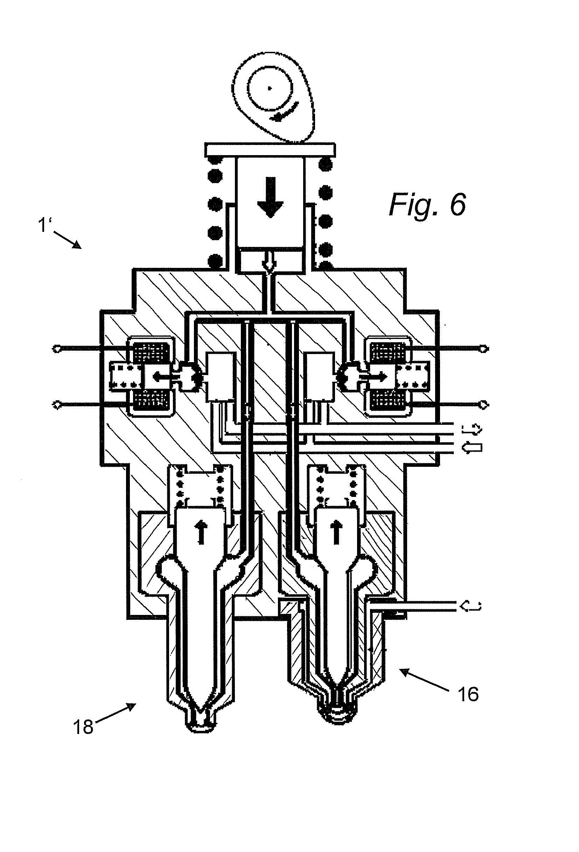

In a DF engine typically two operation modes are possible: In a gas-fuel mode natural gas is mixed with intake air and ignited in a compression chamber 17. In a liquid-fuel mode a conventional mixture of liquid fuel and air is ignited. In order to implement such different modes twin-nozzled injectors 1' as shown in Fig. 6 are commonly used: In addition to a first nozzle 16 that will be explained in more detail below at least one second nozzle 18 for injecting a main-fuel - for instance, diesel - in a liquid-fuel mode is provided. Since the functioning of such a second nozzle 18 is well known in the art no more details are given - the elements of the first nozzle 16 are explained in connection with Fig. 1.

In order to increase the performance of the engine and to reduce emissions a gaseous oxidising medium is injected into the combustion chamber 17 through the second apertures 10. Here, pressurized air is used which is introduced into the fuel injection unit 1 by air intake duct 12 (see Fig. 1).

Referring to Fig. 4 the invention is discussed in more detail: In the gas-fuel mode mixture 15 of natural gas and air is induced into the combustion chamber 17. In order to ignite this mixture 15 it is commonly known to introduce and ignite some liquid pilot fuel F into the combustion chamber 17. For this purpose first apertures 9 are provided in the first nozzle 16. However, such a pilot injection is difficult to calibrate and may lead to increased emissions.

Therefore, the first nozzle 16 comprises multiple second apertures 10 with each second aperture 10 being assigned to at least one first aperture 9. Assigned here means that the apertures 9, 10 are arranged in close vicinity to each other. Preferably, the second apertures 10 are arranged in a distance to their assigned first aperture 9 from where the gaseous oxidising medium A is injectable to an ignition area 19 (dotted circle in Fig. 4) of the combustion chamber 17 into which liquid pilot fuel F is injected by the first aperture 9 assigned to the second apertures 10. Reference numerals 13 and 14 indicate intake lines and return lines for the pilot fuel.

This means that in relation to their corresponding first aperture 9 the second apertures 10 are arranged in such a distance that the gaseous oxidising medium A is injected in the same area of the combustion chamber 17 as the pilot fuel F. Depending on when the gaseous oxidising medium A and the pilot fuel F are injected the gaseous oxidising medium A is enveloping the injected pilot fuel F.

In that way, the injected gaseous oxidising medium A forms an envelope around the spray of liquid pilot fuel F, thereby facilitating a better combustion environment for the pilot injection by keeping the less self-ignitable mixture 15 from diluting the better self-ignitable liquid pilot fuel F. The liquid pilot fuel F is ignited by appropriate means (not shown in the Figs.) such as compression. Since the pilot fuel is not mixed with other components in the combustion chamber 17 the ignition delay is shorter than in prior art solutions. Because more pilot fuel is available for ignition the heat release is better and less pilot fuel is necessary to get the same results, leading to lower emissions.

Fig. 5 shows a diagram wherein the control signal S_{A} for injecting the gaseous oxidising medium A - here, pressurized air - and the control signal S_{F} for injecting liquid pilot fuel F is applied over time t during a pilot fuel injection phase in the gas-fuel mode.

In the embodiment shown in Fig. 5 the injection signal S_{A} of the gaseous oxidising medium A is produced well before the injection signal S_{F} of the pilot fuel F.

The start time t_{AS} of the gaseous medium is scheduled before the start time t_{FS} of liquid pilot fuel injection. Hence, the gaseous oxidising medium A is injected first in order to push back the gas/air-mixture 15 in the area of the first 9 and second apertures 10 and to furnish, as much as possible, a pure oxidiser envelope around the subsequently injected pilot fuel spray F. In this way a combustion environment is facilitated for pilot diesel fuel F in the ignition region as indicated with numeral 19 in Fig. 4, within the lean natural gas mixture 15.

Consequently, the ignition mixture of region 19 comprises a relatively high diesel portion, hence the ignition delay decreases. Further, there is a better heat release intensity. A further advantage is that a potentially smaller diesel injection quantity is necessary, which results in low THC- (Total Hydro Carbon) and NOx-emissions. Also, a cooler combustion environment is established due to lower injection air temperature.

In additional variants of the invention not shown in Fig. 5 the start time t_{AS} of the gaseous oxidising medium and the start time t_{FS} of liquid pilot fuel injection may be the same. Also, Fig. 5 shows that the end time t_{AF} of the injection of the gaseous oxidising medium is scheduled after the start time t_{FS} of the pilot fuel injection. However, this may also be different with the injection of the gaseous oxidising medium A ending before the start time t_{FS} of liquid pilot fuel injection or even after the end time t_{FF} of the pilot fuel injection.

Regarding the duration (duration t_{AD} of injection of oxidising medium, duration t_{FD} of injection of pilot fuel), beginning and ending of the respective injections it is possible to choose them depending on the amount of liquid pilot fuel (F) injected into the combustion chamber 17.

## Claims

1. Fuel injection unit (1) for assembly to a cylinder head and for injecting pilot fuel into a combustion chamber (17) of a dual-fuel engine, the fuel injection unit (1) comprising at least one first nozzle (16) with at least one first aperture (9) for injecting a liquid pilot fuel (F) into the combustion chamber (17), **characterised in that** the first nozzle (16) comprises at least one second aperture (10) for injecting a gaseous medium (A) into the combustion chamber (17) and each second aperture (10) is assigned to at least one first aperture (9).

2. Fuel injection unit (1) according to claim 1, **characterised in that** the second aperture (10) injects an oxidising medium (A) into the combustion chamber (17).

3. Fuel injection unit (1) according to claim 1 or 2, **characterised in that** each first aperture (9) is provided with multiple second apertures (10) which surround their assigned first aperture (9).

4. Fuel injection unit (1) according to any of the claims 1 to 3, **characterised in that** the second apertures (10) are arranged at a distance to their assigned first aperture (9) from where a gaseous medium (A) is injectable to an area of the combustion chamber (17) into which liquid pilot fuel (F) is injected by the first aperture (9) assigned to said second apertures (10).

5. Fuel injection unit (1) according to claim 4, **characterised in that** all second apertures (10) are arranged at equal distance to their assigned first aperture (9).

6. Fuel injection unit (1) according to any of the preceding claims, **characterised in that** multiple second apertures (10) are located on a pitch circle around their assigned first aperture (9), preferably pairwise opposite of each other.

7. Fuel injection unit (1) according to any of the preceding claims, **characterised in that** it comprises at least one second nozzle (18) for injecting a main fuel into the combustion chamber (17).

8. Method for operating a fuel injection unit (1) according to any of the preceding claims, comprising the following steps:
a) injecting gaseous medium through at least one second aperture (10) and
b) injecting liquid pilot fuel (F) through at least one first aperture (9) which is assigned to the at least one second aperture (10) of step a).

9. Method according to claim 8, wherein in step a) an oxidising medium is injected via the at least one second aperture (10).

10. Method according to claim 8 or 9, wherein the start time (t_{AS}) of step a) is scheduled before or simultaneously with the start time (t_{FS}) of step b).

11. Method according to any of the claims 8 to 10, wherein the end time (t_{AF}) of step a) is scheduled before or simultaneously with or after the start time (t_{FS}) of step b).

12. Method according to any of the claims 8 to 11, wherein gaseous medium of step a) is pressurized, preferably to a pressure of at least the pressure in the combustion chamber (17) at the start time (t_{AS}) of step a).

13. Method according to claim 12, wherein the pressure of the gaseous medium is at least the same or higher than the pressure in the combustion chamber (17) before TDC.

14. Method according to any of the claims 8 to 13, wherein the gaseous medium of a second aperture (10) in step a) is injected to an area of the combustion chamber (17) into which liquid pilot fuel of its assigned first aperture (9) is injected in step b).

15. Method according to any of the claims 8 to 14, wherein at least one of the following instants or durations of time is chosen depending on the amount of liquid pilot fuel (F) in step b): start time (t_{AS}) of step a), end time (t_{AF}) of step a), duration (t_{AD}) of step a), start time (t_{FS}) of step b), end time (t_{FF}) of step b), duration (t_{FD}) of step b).
